# EUROPÄISCHE PATENTSCHRIFT

(11) **EP 2 171 554 B1**
(45) Veröffentlichungstag und Bekanntmachung des Hinweises auf die Patenterteilung: **25.10.2017**
(21) Anmeldenummer: 08748373.1
(22) Anmeldetag: 29.05.2008
(51) Int. Cl.: G05B 19/042

(54) **VERFAHREN UND VORRICHTUNG ZUM EINSTECKEN, SAMMELN ODER ZUSAMMENTRAGEN EINER VIELZAHL VON FLEXIBLEN, FLÄCHIGEN PRODUKTEN**
METHOD AND DEVICE FOR INSERTING, COLLECTING OR COLLATING A PLURALITY OF FLEXIBLE, PLANAR PRODUCTS
PROCÉDÉ ET DISPOSITIF D'ENFICHAGE, DE COLLECTE OU D'ASSEMBLAGE DE PLUSIEURS PRODUITS PLATS FLEXIBLES

(30) Priorität: 20.07.2007 CH 11752007
(43) Veröffentlichungstag der Anmeldung: 07.04.2010
(73) Patentinhaber: Ferag AG, 8340 Hinwil (CH)
(72) Erfinder: MÜLLER, Erwin, CH-8635 Dürnten (CH)
(74) Vertreter: Rentsch Partner AG
(86) Internationale Anmeldenummer: PCT/CH2008/000243
(87) Internationale Veröffentlichungsnummer: WO 2009/012604

(56) Entgegenhaltungen:
- EP-A- 0 376 743
- EP-A- 0 917 965
- EP-A- 1 525 998
- WO-A-03/054644

## Beschreibung

### FELD DER ERFINDUNG

Die vorliegende Erfindung fällt in das Gebiet der Druckweiterverarbeitung; sie betrifft eine Vorrichtung zum Einstecken, Sammeln oder Zusammentragen von flächigen Produkten gemäss Oberbegriff des Patentanspruchs 1 und ein Verfahren zum Einstecken, Sammeln oder Zusammentragen von flächigen Produkten gemäss Oberbegriff des Patentanspruchs 14.

### STAND DER TECHNIK

Aus dem Stand der Technik sind Anlagen zum Einstecken, Sammeln oder Zusammentragen von Produkten bekannt, welche eine Haupteinheit mit einem Fördermittel und mehrere Nebeneinheiten mit eigenen Antrieben zum Zuführen von Produkten an das Fördermittel aufweisen.

Die Nebeneinheiten sind beispielsweise Zuförderer und müssen zur Gewährleistung einer gewünschten Lage des von ihnen zugeführten Produkts relativ zu einer vordefinierten Position am Fördermittel zeitlich aufeinander abgestimmt werden. Da mit ein und denselben Zuförderern Produkte unterschiedlicher Länge an das Fördermittel abgegeben werden müssen und der Abstand von einer Nebeneinheit zu einer weiteren Nebeneinheit aufgrund räumlicher Randbedingungen nicht immer taktoptimal ist, müssen entsprechende Massnahmen getroffen werden, um dennoch eine synchronisierte Zufuhr von Produkten an das Fördermittel zu gewährleisten. Eine derartige Massnahme liegt in der Verschiebung der Phasenlage des Zuförderers, beziehungsweise der Zuförderer relativ zur Phasenlage des Fördermittels, Die Phasenlage ist im Idealfall 100 %, das heisst, dass der Arbeitstakt der Zuförderer genau dem Arbeitstakt des Fördermittels entspricht. Aus den vorgängig genannten Gründen werden die Arbeitstakte der Zuförderer relativ zum Arbeitstakt des Fördermittels anzupassen sein. Eine derartige Verschiebung der Phasenlage kann allerdings nur innerhalb eines Arbeitstaktes des Fördermittels erfolgen. Die Berechnung der Phasenlage erfolgt typischerweise in einer zentralen Steuerung oder in einer Antriebssteuerung/-regelung, welche jeder Nebeneinheit zugeordnet ist, wobei die zentrale Steuerung und die Antriebssteuerungen/-regelungen der Nebeneinheiten über einen Datenbus miteinander verbunden sind. Zum Berechnen des Zuführzeitpunktes müssen den Antriebssteuerungen/-regelungen der Nebeneinheiten weitere Signale übermittelt werden, was bei herkömmlichen Anlagen dazu führt, dass zahlreiche Signale oder Daten zwischen der zentralen Steuerung und diesen Antriebssteuerungen/-regelungen der Nebeneinheiten ausgetauscht werden müssen, wobei es sich bei den Signalen oftmals um analoge Signale handelt, für welche entsprechende Einzelverbindungen erforderlich sind. Derartige Verbindungsleitungen und Verbindungsstecker sind generell eine mögliche Problemquelle für eine optimale Signalübertragung, beispielweise auf Grund elektromagnetischer Unverträglichkeiten und sind daher dementsprechend störanfällig.

Die EP 0917 965 B1 offenbart eine Ausführungsform, in welcher ein Datenaustausch zwischen mehreren Antriebssteuerungen und einer zentralen Steuerung ausschliesslich über ein Bussystem erfolgt, wodurch die Anzahl an Verbindungen zwischen Haupt- und Nebeneinheiten reduziert wird. Zusätzliche Signale werden über die Antriebssteuerung, welche jeder Einheit zugeordnet ist, und über eine jeder Antriebssteuerung zugeordneten Eingabe-/Ausgabeeinheit an eine Busschnittstelle übermittelt und dort dem Datenbus übergeben. Der Datenbus überträgt somit einerseits Daten aus einem vorangegangenen Einrichtbetrieb, als auch den analogen Signalen entsprechende Daten zwischen der zentralen Steuerung und den einzelnen Antriebssteuerungen.

Die bekannten Vorrichtungen sind hinsichtlich der Übertragungsgeschwindigkeit und der Datensicherheit unzureichend.

### HINTERGRUND DER ERFINDUNG

Deshalb ist es hinsichtlich einer Vorrichtung Aufgabe der vorliegenden Erfindung einen vereinfachten, sichereren und schnelleren Datenverkehr einer Anzahl Antriebssteuerungen, beziehungsweise -Regelungen mit einer Hauptantriebsregelung zu ermöglichen,

Des Weiteren ist es hinsichtlich eines Verfahrens Aufgabe der vorliegenden Erfindung einen Datenverkehr einer Anzahl Antriebssteuerungen, beziehungsweise -Regelungen mit einer Hauptantriebsregelung zu vereinfachen und sicherer und schnellerer zu machen.

Die der Erfindung für die Vorrichtung zu Grunde liegende Aufgabe wird mit den Merkmalen des Anspruchs 1 gelöst. Weitere Ausführungsformen sind Gegenstand der abhängigen Ansprüche 2 bis 13. Die Erfindung zeichnet sich dadurch aus, dass Daten von einer Hauptantriebsregelung und von einer Anzahl Antriebsregelungen direkt einem gemeinsamen Datenbus übergeben werden, wodurch der zeitraubende Umweg über eine Eingabe/Ausgabe-Einheit, wie dies beim Stand der Technik der Fall ist, entfällt. Zudem wird durch die direkte Übertragung von Daten der Hauptantriebsregelung und jeder Antriebsregelung direkt an den Datenbus die Fehlerwahrscheinlichkeit der Datenübertragung und die Fehlerquote der gesamten Vorrichtung gesenkt, da weniger Komponenten und weniger interne Anschlussverbindungen zum Übertragen dieser Daten notwendig sind.

In einer ersten Ausführungsform der vorliegenden Erfindung weist eine Vorrichtung zum Einstecken, Sammeln oder Zusammentragen einer Vielzahl von flexiblen, flächigen Produkten eine Produktsammeleinheit und eine Vielzahl von Bearbeitungseinheiten auf, wobei fortan stellvertretend und zur Vereinfachung der Erklärungen lediglich von einer ersten Bearbeitungseinheit und von einer zweiten Bearbeitungseinheit gesprochen werden wird.

Unter dem Begriff Produkte werden hauptsächlich Druckprodukte, Druckereiprodukte oder Druckerzeugnisse, wie auch Teilprodukte wie Einlegeblätter, Postkarten oder Werbe-Produktbeilagen verstanden. Ein Produkt kann eine Zeitung, eine Zeitschrift oder ein ähnliches Druckereierzeugnis sein. Weiter umfasst der Begriff Produkt auch mehrteilige Druckprodukte, welche mindestens ein Hauptprodukt und ein oder mehrere Teilprodukte umfassen. Ebenso kann ein Teilprodukt selber mehrteilig sein und selber Haupt- und Teilprodukte umfassen.

Alle Bearbeitungseinheiten dienen zum synchronisierten Bearbeiten, beispielsweise zum Zuführen und Heften von Produkten. Die Produktsammeleinheit weist weiter eine Hauptantriebsregelung auf, welche mit einem Hauptantrieb zum Antreiben eines Fördermittels wirkverbunden ist, wobei das Fördermittel üblicherweise von einer Sammeltrommel oder einem Sammelband verkörpert wird. Die erste Bearbeitungseinheit weist eine erste Antriebsregelung auf, welche mit einem ersten Antrieb wirkverbunden ist. Unter "wirkverbunden" wird eine steuerungstechnische Verbindung verstanden, welche jedoch auch indirekt sein kann, d.h. über mehrere -hier nicht näher beschriebene Komponenten- führen kann. Die zweite Bearbeitungseinheit weist eine zweite Antriebsregelung auf, welche mit einem zweiten Antrieb wirkverbunden ist. Die Hauptantriebsregelung sowie die erste und zweite Antriebsregelung sind überdies über einen ersten Datenbus miteinander wirkverbunden. Weiter weist die erste Bearbeitungseinheit einen ersten Datensammler auf, welcher mit der Hauptantriebsregelung und der ersten Antriebsregelung über den oben genannten ersten Datenbus verbunden ist. Ebenso weist die zweite Bearbeitungseinheit einen zweiten Datensammler auf, welcher mit der ersten Antriebsregelung und der zweiten Antriebsregelung über den ersten Datenbus verbunden ist.

Überdies ist aufgrund der kleineren Teile- oder Komponentenanzahl die erfindungsgemässe Vorrichtung gegenüber dem Stand der Technik nicht so kostenintensiv und wegen des geringeren Wartungsaufwand wirtschaftlicher betreibbar. Angesichts der in der Druckweiterverarbeitung mit vergleichbaren Vorrichtungen üblichen hohen Stückzahlen, beispielsweise 30'000 bis 40'000 Exemplaren pro Stunde, fallen entsprechend viele Daten an, welche in der Steuerung, der Hauptantriebsregelung und jeder Antriebsregelung verarbeitet werden müssen. Bei derart hohen Taktzyklen wird daher die jeder Komponente innewohnende Fehlerquote (MTBF) relevant und trägt zu einer gegenüber dem Stand der Technik signifikant kleineren Gesamtfehlerquote bei.

In einer weiteren Ausführungsform weist die Produktsammeleinheit eine erste Steuerung auf, welche vorzugsweise direkt über den ersten Datenbus mit der Hauptantriebsregelung verbunden ist. Eine derartige Anordnung von lokaler Intelligenz in Form einer Steuerung kann nun gezielt zur Entlastung einer übergeordneten Einheit, welche die Befehle für die vorliegende Vorrichtung vorgibt, eingesetzt werden. Im vorliegenden Fall wird die erste Steuerung gezielt durch die erste und zweite Antriebssteuerung entlastet, welche die Ermittlung der Soll-Werte, also die Phasensynchronisation für ihre jeweiligen Antriebe lokal übernehmen. Dabei dienen die Hauptantriebsregelung und die erste und zweite Antriebsregelung bevorzugt lediglich als Phasensteuerungen, während der erste Datensammler und der zweite Datensammler entsprechende lokale Steuerungen, beispielsweise konventionelle SPS-Steuerungen, ersetzen. Die erste Steuerung hat somit genug Kapazität, um beispielsweise ein Fehlermanagement zu übernehmen

Dem Fachmann sind Feldbusse, Ethernet und Industrial Ethernet, sowie insbesondere die Erweiterung bezüglich Echtzeit-Ethernet (Real-Time Ethernet) und FAST-Ethernet zur Datenkommunikation zwischen einzelnen, an der Steuerung eines Prozesses beteiligten Teilnehmern bekannt. Beispiele für bekannte Feldbusse sind CAN-Bus, Profibus, Modbus, Device-Net oder Interbus. Die Kommunikation der Busteilnehmer erfolgt per Ethernet anhand von spezifizierten Protokollen. Des Weiteren sind die Anforderungen an die Netzwerkfähigkeit bekannnt, um einfache und kostengünstige Kommunikationsmechanismen zur Verfügung zu stellen und um industrielle Geräte an ein derartiges Netz anzubinden. Auch das Erfordernis der Kopplung von Antriebskomponenten, beispielsweise zwischen Antriebsregelungen, Leistungsteilen und Gebern bei numerisch gesteuerten Werkzeugmaschinen und Robotern ist bekannt, bei denen eine Mehrzahl interpolierender Achsen synchron betrieben werden müssen.

Da der erste Datenbus in der vorliegenden Ausführungsform bevorzugt mit EtherCat (Ethernet for Control Automation Technology) realisiert ist, ist ein Datenaustausch zwischen den Teilnehmern (z.B. Antriebsregelungen usw.) in Echtzeit gewährleistet.

Die Echtzeit-Datenübertragung ermöglicht es, dass die Intelligenz nicht unter Verursachung eines grossen Kontroll- und Abgleichaufwandes dezentralisiert, sondern zentral belassen werden kann, ohne jedoch ganz auf die Vorteile der dezentralen Intelligenz verzichten zu müssen. Die Steuerung erkennt auf Grund der hohen Datengeschwindigkeit von 500 Byte pro Sekunde bei EtherCat nicht, dass sie den Hauptantrieb sowie den ersten und den zweiten Antrieb nicht direkt ansteuert, sondern ihre Slaves (d.h. die erste und zweite Antriebssteuerung) dies übernehmen. Die kurzen Zykluszeiten bei EtherCat sind eine Folge der Durchlaufverarbeitung, welche zu einer guten Bandbreitenausnutzung führen, da die erste Steuerung, die Hauptantriebsregelung, die erste und die zweite Antriebsregelung sowie der erste und der zweite Datensammler nicht zu jedem Zeitpunkt einen eigenen Rahmen (Frame) benötigen.

Aufgrund der Leistungsfähigkeit von EtherCat können in einem Rahmen nebst Leitwert, Ist-Einertakt und Ist-Feintakt zudem beispielsweise der Status der Produktsammeleinheit und aller Bearbeitungseinheiten, deren Zähler, Schwellwert, Geschwindigkeiten, Grenzwerte eingetragen werden.

Weiter ist in einer besonders bevorzugten Vorrichtung dem Hauptantrieb ein erstes Erfassungselement zum Erfassen eines ersten Ist-Wertes, auch Ist-Feintakt genannt, zugeordnet.

Da Erfassungselemente wie dem Antriebsmotor zugeordnete, beziehungsweise eingebaute Drehgeber dem Fachmann bekannt sind, wird auf deren detaillierte Beschreibung an dieser Stelle verzichtet. Der erste Ist-Wert wird über eine erste Verbindung, vorzugsweise in Form einer konventionellen Signalleitung der Hauptantriebsregelung zugeführt.

Da selbst gute Antriebe nicht perfekt sind, entstehen auf Grund eines Getriebespiels infolge Verschleiss, sowie einer steuerungstechnisch zweckmässigen, mathematischen Rundung einer Nachkommastelle der Zahl Π (Pi) bei jeder vom Antriebsmotor ausgeführten Bewegung ein geringer Fehler in der Winkelsynchronität bezüglich der vom Antriebsmotor am effektiven Fördermittel bewirkten Bewegung. Auf Grund der hohen Stückzahlen in der Druckweiterverarbeitung treten dadurch rasch mehrere Fehler pro Stunde auf, was untolerierbar ist. Aus diesem Grund ist bei einer bevorzugten Ausführungsform der vorliegenden Vorrichtung dem Fördermittel ein zweites Erfassungselement zum Erfassen eines zweiten Ist Wertes, auch Ist-Einertakt genannt, zugeordnet. Das Erfassungselement ist über eine zweite Verbindung, vorzugsweise eine zweiten Signalleitung mit der Hauptantriebsregelung verbunden.

In einer weiteren, bevorzugten Ausführungsform der Vorrichtung der vorliegenden Erfindung ist mindestens die erste, vorzugsweise jedoch auch die zweite Bearbeitungseinheit modular gestaltet. Dadurch erhält ein Betreiber der Vorrichtung die Möglichkeit, zumindest bei schnittstellenspezifisch baugleicher erster und zweiter Bearbeitungsstation die erste gegen die zweite Bearbeitungseinheit auszutauschen und umgekehrt. Zudem wird die Flexibilität der Vorrichtung vergrössert, da bei einer defekten ersten Bearbeitungseinheit diese rasch durch eine gleiche oder zumindest schnittstellenspezifisch kompatible Bearbeitungseinheit ersetzbar ist, ohne dass lange Stillstandzeiten der gesamten Vorrichtung hingenommen werden müssen.

Zu Steuerzwecken ist bei einer weiteren, bevorzugten Ausführungsform der Vorrichtung die erste Steuerung über einen zweiten Datenbus mit einer übergeordneten Einheit verbunden. Die übergeordnete Einheit ist beispielsweise ein übergeordneter Datensammler, welcher keine Intelligenz aufweist und die erste Steuerung lediglich anweist, was in der vorliegenden Vorrichtung mit welcher Struktur zu produzieren ist. An der Tatsache, dass nicht der erste Datenbus dazu verwendet wird, sondern ein separater zweiter Datenbus eingesetzt ist, ist erkennbar, dass eine verbesserte Steuersicherheit gegenüber dem Stand der Technik erreicht wird. Dies ist beispielsweise dann von Bedeutung, wenn der Datenaustausch auf dem ersten Datenbus infolge Überlastung zusammenbricht, und erlaubt es, trotzdem eine gesteuerte Ausschaltung der Vorrichtung durchzuführen. Bei einem Online-Betrieb der Vorrichtung bildet zum Beispiel eine vorgeschaltete Rotationsdruckmaschine einen übergeordneten Master und kommuniziert über den zweiten Datenbus -vorzugsweise ebenfalls einem EtherCat-Busmit der ersten Steuerung, welcher dazu entsprechend als Slave definiert ist. Allfällige Produktionsschwankungen der Rotationsdruckmaschine werden von der Vorrichtung durch die erste Steuerung entsprechend geregelt, weshalb die Förderleistung des Fördermittels laufend entsprechend anpassbar ist. Bei einem Offline-Betrieb ist die Drehzahl des Fördermittels hingegen weitgehend konstant und die erste Steuerung bildet den Master.

In einer besonders bevorzugten Ausführungsform der Vorrichtung ist die zweite Bearbeitungseinheit eine Vorsammelvorrichtung und weist daher eine Vorproduktsammeleinheit sowie eine erste Vorbearbeitungseinheit und eine zweite Vorbearbeitungseinheit zum synchronisierten Bearbeiten, vorzugsweise zum Zuführen von Produkten auf. Analog zu den Bearbeitungseinheiten sollen die Bezeichnung erste Vorbearbeitungseinheit und zweite Vorbearbeitungseinheit nicht limitierend, sondern einer vereinfachten Erklärung wegen lediglich als Stellvertreter für eine beliebige Anzahl von Vorbearbeitungseinheiten verstanden werden.

Bevorzugt werden die Vorbearbeitungseinheiten durch Zuförderer zum Zuführen von identischen und/oder verschiedenen Teilprodukten zur Bildung eines vorgesammelten Stapels gebildet. Ob diese Zuförderer als Stangenanleger ausgebildet sind oder eine andere Bauform aufweisen, ist für die nachfolgend beschriebene Steuersituation nicht wesentlich. Die Vorproduktsammeleinheit weist anstelle des zweiten Datensammlers eine zweite Steuerung auf, welche über die zweite Antriebsregelung mit dem zweiten Antrieb zum Antreiben eines Vorfördermittels wirkverbunden ist. Die erste Vorbearbeitungseinheit weist eine erste Vorantriebsregelung auf, welche ihrerseits mit einem ersten Vorantrieb wirkverbunden ist. Überdies weist die zweite Vorbearbeitungseinheit eine zweite Vorantriebsregelung auf, welche mit dem zweiten Vorantrieb wirkverbunden ist. Die zweite Antriebsregelung und die erste und die zweite Vorantriebsregelung sind über einen dritten Datenbus in einer Linienstruktur miteinander wirkverbunden. Da das Steuerschema der Vorsammelvorrichtung analog zum Steuerschema der gesamten Vorrichtung aufgebaut ist, ist dem zweiten Antrieb entsprechend ein drittes Erfassungselement zum Erfassen eines dritten Ist-Wertes des zweiten Antriebs zugeordnet. Dieser dritte Ist-Wert wird nachfolgend auch zweiter Ist-Feintakt genannt. Dieses dritte Erfassungselement ist entsprechend durch eine dritte Verbindung, vorzugsweise einer dritten Signalleitung, mit der zweiten Antriebsregelung verbunden. Die erste Vorbearbeitungseinheit weist zudem einen ersten Vordatensammler auf, welcher mit der zweiten Antriebsregelung und der ersten Vorantriebsregelung wirkverbunden ist. Dementsprechend weist die zweite Vorbearbeitungseinheit einen zweiten Vordatensammler auf, welcher mit der ersten Vorantriebsregelung und der zweiten Unterantriebsregelung wirkverbunden ist.

Zum Ausschliessen des vorgängig erklärten Fehlers ist zwischen dem zweiten Antriebsmotor und dem von ihm angetriebenen Vorfördermittel ein viertes Erfassungselement zum Erfassen eines vierten Ist-Wertes des Vorfördermittels, nachfolgend auch zweiter Ist-Einertakt genannt, zugeordnet. Dieses vierte Erfassungselement ist über eine vierte Verbindung, vorzugsweise einer vierten Signalleitung mit der zweiten Antriebsregelung verbunden.

Mit einer derartigen Steuerlogik wird die erste Steuerung von einer wesentlichen Anzahl von Rechenoperationen entlastet, da für sie die zweite Steuerung nach wie vor eine Slave-Funktion hat und ihr deshalb nur eine begrenzte Anzahl Daten ungefiltert übermittelt. Die zweite Steuerung hat zudem steuertechnisch eine Masterfunktion in Bezug auf die ihr zugeordneten Vordatensammler und deren Vorantriebssteuerungen. Um den ersten Datenbus lokal nicht zu überlasten und um eine lange Abzweigung in der Linienstruktur des ersten Datenbusses zu vermeiden, erfolgt der Datenaustausch auf einem separaten, zweiten Datenbus.

Es ist auch möglich, den zweiten Datenbus über ein Kopplungselement mit dem ersten Datenbus zu verbinden.

In einer weiteren Ausführungsform der Vorrichtung wird ein als Slave definierter Datenbusteilnehmer -beispielsweise der erste Datensammler- mit der ersten Antriebsregelung temporär zu einem Master. Diese Doppelfunktion erlaubt beispielsweise dem ersten Datensammler, innerhalb eines ihm zugestandenen Kompetenzbereiches autonom in einer Teilfunktionalität vor Ort entscheiden zu können, ob er einem benachbarten Slave, beispielsweise dem zweiten Datensammler direkt Steuerdaten übermitteln soll, welche die Leitdaten oder Leitwerte der ersten Steuerung überlagern. Um beim ersten Datenbus mit sequentiell umlaufenden Rahmenverkehr eine derartige Slave-to-Slave-Kommunikation zwischen Datenbusteilnehmern zu ermöglichen, von denen kein Slave eine Busmasterfunktionalität besitzt, wird bevorzugt der Protokollchip des Busteilnehmers, der Daten an andere Busteilnehmer versenden will, mit einem Sendespeicher und gegebenenfalls einem Empfangsspeicher ergänzt.

Zum Ausschliessen des vorgängig erklärten Fehlers zwischen den Antriebsmotoren und den von ihnen angetriebenen Fördermitteln oder Vorfördermitteln, weisen sowohl die Produktsammeleinheit und die Vorproduktsammeleinheit, als auch die Bearbeitungseinheiten und Vorbearbeitungseinheiten jeweils eine eigene Ist-Feintakt-Erfassung und eine eigene Ist Einertakt-Erfassung auf. Diese werden bei der Hauptantriebsregelung und bei der zweiten Antriebsregelungen einerseits zum lokalen Nachregeln im Fehlerfall und andererseits als Grundlage für die Berechnung eines Leitwerts für die Phasenverschiebung der ihnen zugeordneten Bearbeitungsstationen eingesetzt, während die erste und die zweite Vorantriebsregelung ausschliesslich zum lokalen Nachregeln des ersten, beziehungsweise zweiten Vorantriebs eingesetzt werden.

In einer weiteren Ausführungsform der Vorrichtung ist ein Signalregenerator (Repeater) zu Überbrückungszwecken bei der ersten Antriebsregelung angeordnet, welche die Bus-Signale, sprich die Ethernet/EtherCat-Rahmen empfängt und neu aufbereitet an den zweiten Datensammler weitergibt, falls die erste Antriebsregelung ausfällt. Damit ist gewährleistbar, dass die in der Linienstruktur "nachgeschalteten" Teilnehmerkomponenten wie Datensammler oder Antriebssteuerungen weiterhin zuverlässig mit Daten versorgt werden.

In einer weiteren Ausführungsform der Vorrichtung bildet eine Sammeltrommel mit umfangsseitig angeordneten Sätteln, bevorzugt jedoch mit Taschen, das Fördermittel. Die erste Bearbeitungseinheit ist vorzugsweise ein Zuförderer und die zweite Bearbeitungseinheit ein Wegförderer. In einer weiteren Ausführungsform der Vorrichtung bildet eine weitere Bearbeitungseinheit eine Heftstation.

Weiter weist in einer weiteren Ausführungsform der Vorrichtung die Sammeltrommel eine erste Teiltrommel und eine zweite Teiltrommel auf, welche in bekannter Weise kreiszylinderförmig aufgebaut und achslinear verlaufend angeordnet sind. Dabei bildet die erste Teiltrommel das Fördermittel und die zweite Teiltrommel ein weiteres Fördermittel im Sinne des Fördermittelgedankens. Das Fördermittel und das weitere Fördermittel sind entsprechend über einen ersten Hauptantrieb, beziehungsweise einen zweiten Hauptantrieb derart mit der Hauptantriebsregelung wirkverbunden, dass die erste Teiltrommel und die zweite Teiltrommel abhängig und unabhängig voneinander angetrieben werden können und untereinander synchronisierbar sind. Derartige Sammeltrommeln mit mehreren Teiltrommeln sind dem Fachmann aus EP 0344102 A2, EP 0672603 A1 und EP 0681979 A1 bekannt. Eine derart aufgebaute Sammeltrommel erhöht die Einsatzflexibilität beim Betreiber dadurch, dass beispielsweise bei sechs Zuförderern entweder ein Produkt, vorzugsweise ein Druckprodukt mit fünf Teilprodukten oder zwei Druckprodukte mit je zwei Teilprodukten herstellbar sind.

In einer weiteren Ausführungsform der Vorrichtung ist das Fördermittel durch ein Förderband gebildet, wobei das Förderband idealerweise dehnungsarm und formstabil ist. Eine solche Vorrichtung ist beispielsweise zum stapelweisen Sammeln von Produkten einsetzbar, welche anschliessend in einem Folienbeutel verpackt werden.

In einer weiteren Ausführungsform der Vorrichtung weist das Förderband fächerartige Abteile auf, in welche Teilprodukte und oder Hauptprodukte eingeworfen beziehungsweise zugeführt werden. Durch eine Neigung der Fächer relativ zu einer Förderrichtung des Förderbandes wird sichergestellt, dass sich die gesammelten Produkte in einer bevorzugten Lage befinden, nämlich an einer Seitenwand eines Abteils, welches einen Anschlag für die schrägliegenden Produkte und/oder zugeführten Teilprodukte bildet.

In einer weiteren, bevorzugten Ausführungsform der Vorrichtung werden der Hauptantrieb, sowie der erste und zweite Antrieb leistungsmässig von jeweils einem Leistungselement, vorzugsweise einem winkelsynchronisierten Frequenzumrichter angetrieben. Jedes dieser Leistungselemente ist steuertechnisch jeweils über einen eigenen Unterdatenbus mit der ihm zugeordneten Hauptantriebsregelung, beziehungsweise der ersten oder zweiten Antriebssteuerung verbunden. Durch die bewusste Trennung der Steuersignalebene von der Leistungsebene wird einerseits die Fehlersicherheit durch einen räumlichen Abstand von Signal- und Steuerkreis vergrössert und bekannte Probleme, wie beispielsweise Störsignale im Steuerkreis wegen Spitzen im Leistungskreis entschärft. Die Leistungselemente sind vorzugsweise als einfache Stellglieder eingesetzt, welche einen wartungsarmen, stabilen Betrieb der Vorrichtung sicherstellen.

In einer weiteren Ausführungsform der Vorrichtung ist die Hauptantriebsregelung und/oder die erste Antriebsregelung und/oder die zweite Antriebsregelung jeweils mit mehreren Leistungselementen zum Antreiben mehrerer Antriebe verbunden. Das bedeutet, dass sich mehrere Leistungselemente eine ihnen zugeordnete Antriebsregelung teilen. In einer weiteren Form der Vorrichtung der vorliegenden Erfindung führt der Unterdatenbus nur bis zu einem ersten Leistungselement, während ein weiteres Leistungselement als Slave des ersten Leistungselementes konfiguriert -sprich parallel geschaltet- ist.

Die der Erfindung für das Verfahren zu Grunde liegende Aufgabe wird mit den Merkmalen des Anspruchs 14 gelöst. Weitere Ausführungsformen des Verfahrens sind Gegenstand der abhängigen Ansprüche 15 bis 20. In einer ersten Ausführungsform des vorliegenden Verfahrens wird bezüglich des strukturellen Aufbaus der dazu notwendigen Vorrichtung auf die vorangegangene Beschreibung verwiesen. Der Hauptantrieb wird mittels einer Hauptantriebsregelung gesteuert, während der erste und der zweite Antrieb von einer ersten, beziehungsweise einer zweiten Antriebsregelung gesteuert werden. Die Hauptantriebsregelung und die erste und zweite Antriebsregelung tauschen über den ersten Datenbus Daten aus. Auch die erste Steuerung kommuniziert über den ersten Datenbus mit der Hauptantriebsregelung. Beim Senden von Daten der Hauptantriebsregelung für die zweite Antriebsregelung, werden diese von der ersten Steuerung in einen EtherCat-Rahmen geschrieben und dieser Rahmen vom ersten Datenbus nacheinander über den ersten Datensammler, die erste Antriebsregelung und den zweiten Datensammler der zweiten Antriebsregelung zugestellt.

Zum Ausschliessen des bereits vorgängig erklärten Fehlers zwischen den Hauptantriebsmotoren und dem von ihm angetriebenen Fördermittel werden in einer besonders bevorzugten Ausführungsform des vorliegenden Verfahrens der erste Ist-Wert des Hauptantriebs (genau genommen dessen Hauptantriebsmotor) und bevorzugt auch der zweite Ist-Wert des vom Hauptantrieb angetriebenen Fördermittels erfasst und der Hauptantriebsregelung übermittelt. Die Hauptantriebsregelung gleicht auf Grund dieser Daten lokale Soll-Ist-Differenzen aus und beugt damit einer Kumulation von Fehlern vor.

Falls eine Bearbeitungseinheit durch eine Vorsammelvorrichtung gebildet wird, erfolgt in einer besonders bevorzugten Ausführungsform des Verfahrens ein analoges Vorgehen. Dazu wird der dritte Ist-Wert des zweiten Antriebes (genau genommen von dessen Antriebsmotor) und bevorzugt auch der vierte Ist-Wert des vom zweiten Vorantrieb angetriebenen Vorfördermittels erfasst und der zweiten Antriebsregelung übermittelt. Die zweite Antriebsregelung gleicht auf Grund dieser Daten lokale Soll-Ist-Differenzen aus und beugt einer Kumulation von Fehlern vor, wodurch die zweite Steuerung gezielt entlastet wird.

In einer weiteren Ausführungsform des vorliegenden Verfahrens übermittelt der erste Datenbus seine ihm übertragenen Daten in Echtzeit und die erste Steuerung, die Hauptantriebssteuerung, die erste und die zweite Antriebsregelung sowie der erste und der zweite Datensammler lesen die an sie adressierten Daten aus diesem ersten Datenbus ein und aus. Das Auslesen von Daten der Bearbeitungsstationen, beziehungsweise deren Slave-Teilnehmern erfolgt dabei bevorzugt von der ersten Steuerung, um den Koordinationsaufwand zwischen allen Busteilnehmern möglichst gering zu halten.

In einer weiteren Ausführungsform des vorliegenden Verfahrens erzeugt die Hauptantriebsregelung einen Leitwert und schreibt diesen Leitwert zusammen mit dem ersten Ist-Wert und dem zweiten Ist-Wert vorzugsweise in den Datenbus-Rahmen des ersten Datenbusses ein. Unter Leitwert wird eine ermittelte Soll-Phasenlage einer Bearbeitungsstation relativ zum Fördermittel verstanden. Eine Soll-Phasenlage beträgt beispielsweise plus 15%, was einer Phasenverschiebung von 15% entspricht. Der oben genannte Rahmen wird über den ersten Datensammler der ersten Antriebsregelung übermittelt, worauf diese daraus einen ersten Soll-Wert für deren ersten Antrieb ermittelt. Der gleiche Rahmen läuft anschliessend weiter und wird über den zweiten Datensammler der zweiten Antriebsregelung übermittelt, worauf diese daraus einen zweiten Soll-Wert für deren zweiten Antrieb ermittelt.

### KURZBESCHREIBUNG DER FIGUREN

Anhand von Figuren, welche lediglich Ausführungsbeispiele darstellen, wird die Erfindung im Folgenden erläutert. Es zeigen
- Fig. 1: ein Steuerschema für eine Vorrichtung entsprechend einer ersten Ausführungsform der vorliegenden Erfindung;
- Fig. 2: ein Steuerschema einer zweiten Ausführungsform, und
- Fig. 3: ein Steuerschema einer dritten Ausführungsform.

### DETAILLIERTE BESCHREIBUNG BEVORZUGTER AUSFÜHRUNGSFORMEN

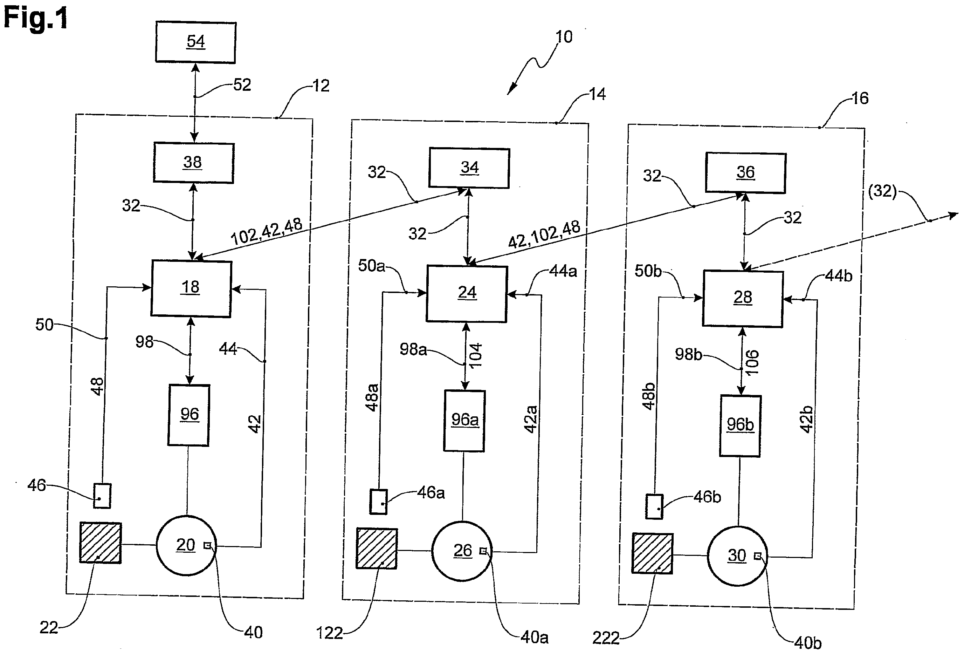

Figur 1 zeigt ein Steuerschema einer erste Ausführungsform einer Vorrichtung 10 gemäss der vorliegenden Erfindung. Die Vorrichtung weist drei nebeneinander angeordnete Einheiten auf, nämlich eine Produktsammeleinheit 12, eine erste Bearbeitungseinheit 14 und eine zweite Bearbeitungseinheit 16. Rechts von der zweiten Bearbeitungseinheit 16 wären eine oder mehrere weitere Bearbeitungseinheiten denkbar.

Die Produktsammeleinheit 12 weist eine erste Steuerung 38 auf, welche über einen ersten Datenbus 32 mit einer Hauptantriebsregelung 18 verbunden ist. Der erste Datenbus wird dabei durch einen EtherCat-Bus gebildet. Die Hauptantriebsregelung 18 ist über einen Unterdatenbus 98 mit einem Leistungselement 96 verbunden, welches durch einen winkelgeregelten Frequenzumrichter gebildet ist. Das Leistungselement 96 ist über eine konventionelle Leistungsverbindung mit einem Hauptantrieb 20 verbunden. Der Hauptantrieb 20 ist zu Antriebszwecken mit einem Fördermittel 22 verbunden. Zudem weist die Produktsammeleinheit 14 ein erstes Erfassungselement 40 zum Erfassen einer Drehlage des Hauptantriebs 20, beziehungsweise dessen Antriebsmotors auf. Dieses erste Erfassungselement ist ein Drehgeber, welcher im vorliegenden Fall durch einen direkt im Hauptantrieb 20 angeordneten Inkrementalencoder gebildet ist. Das erste Erfassungselement 40 ist über eine erste Verbindung 44, welche als konventionelle Signalleitung 44 ausgeführt ist, mit der Hauptantriebsregelung 18 verbunden. Weiter weist die Produktsammeleinheit 12 ein zweites Erfassungselement 46 auf. Dieses zweite Erfassungselement 46 ist ein Induktionssensor, mit welchem eine Drehlage des vom Hauptantrieb 20 angetriebenen Fördermittels 22 erfasst wird. Das zweite Erfassungselement 46 ist über eine zweite Verbindung 50, welche als konventionelle Signalleitung 50 ausgeführt ist, mit der Hauptantriebsregelung 18 verbunden. Mindestens eine der Bearbeitungseinheiten 14, 16 ist dabei als Wegförderer zum Abtransportieren der gesammelten, eingesteckten oder zusammengetragenen Produkte bestimmt. Da derartige Wegförderer bekannt sind, wird nicht näher darauf eingegangen.

Die erste Bearbeitungseinheit 14 ist steuertechnisch baugleich wie die Produktsammeleinheit 12 aufgebaut. Eine erste Antriebsregelung 24 entspricht dabei der Hauptantriebsregelung 18, während eine erste Antriebsregelung 24 der Hauptantriebsregelung 18 entspricht, ein Leistungselement 96a ist baugleich dem Leistungselement 96, ein weiteres erstes Erfassungselement 40a ist baugleich dem ersten Erfassungselement 40, ein weiteres zweites Erfassungselement 46a ist baugleich dem zweiten Erfassungselement 46, und ein erstes Bearbeitungsmittel 122 ist anstelle des Fördermittels 22 angeordnet. Anstelle der ersten Steuerung 38 ist jedoch ein erster Datensammler 34 in der ersten Bearbeitungseinheit 14 angeordnet.

Analog dem ersten Bearbeitungseinheit 14 ist die zweite Bearbeitungseinheit 16 aufgebaut. Dabei entspricht eine zweite Antriebsregelung 28 der ersten Antriebsregelung 24, ein Leistungselement 96b ist baugleich dem Leistungselement 96a, ein weiteres erstes Erfassungselement 40b ist baugleich dem weiteren ersten Erfassungselement 40a, ein weiteres zweites Erfassungselement 46b ist baugleich dem weiteren zweiten Erfassungselement 46a und ein zweites Bearbeitungsmittel 222 ist anstelle des Fördermittels 122 angeordnet. Anstelle des ersten Datensammlers 34 ist ein zweiter Datensammler 36 in der zweiten Bearbeitungseinheit 16 angeordnet.

Ein erster Datenbus 32 verbindet die erste Steuerung 38 mit der Hauptantriebsregelung 18, die Hauptantriebsregelung 18 mit dem ersten Datensammler 34, den ersten Datensammler 34 mit der ersten Antriebsregelung 24, die ersten Antriebsregelung 24 mit einem zweiten Datensammler 36 und diesen mit einer zweiten Antriebsregelung 28. Eine stilisierte Weiterführung des ersten Datenbusses 32 zu weiteren, hier nicht gezeigten Bearbeitungsstationen ist mit Datenbus (32) gekennzeichnet. Die erste Steuerung 38 bildet im vorliegenden Fall einen Master mit Koordinations- und Überwachungsintelligenz, welchem die als Slave definierten, intelligenzarmen Busteilnehmer Hauptantriebsregelung 18, erster und zweiter Datensammler 34, 36, beziehungsweise die erste und zweite Antriebsregelung 24, 28 hierarchisch untergeordnet sind. So werden Daten von der ersten Steuerung 38, welche für die zweite Antriebsregelung 28 vorgesehen sind, nacheinander über die Hauptantriebsregelung 18, den ersten Datensammler 34, die erste Antriebsregelung 24 und den zweiten Datensammler 36 an die zweite Antriebsregelung 28 übermittelt.

Die Vorrichtung ist zu Steuerzwecken von einem übergeordneten Datensammler 54 über einen zweiten Datenbus 52 angesteuert. Der zweite Datenbus 52 wird dabei ebenfalls durch einen EtherCat-Bus gebildet. Bei einem Offline-Betrieb der Vorrichtung 10 erfolgt die Eingabe beispielsweise über eine übergeordnete Recheneinheit oder über eine nicht näher bezeichnete Eingabestation und die erste Steuerung 38 bildet den Master für die Ihr untergebenen, als Slaves definierten Busteilnehmer. Bei einem Online-Betrieb bildet typischerweise eine Rotationsdruckmaschine den Master und gibt den Taktzyklus als Soll-Wert der ersten Steuerung 38 vor. Die erste Steuerung 38 dient in diesem Fall als Slave gegenüber dieser übergeordneten Einheit 54 (z.B. der Rotation) und ist dabei gleichzeitig der Master über der ihr untergeordneten Hauptantriebsregelung 18 und den ersten und zweiten Datensammler 34, 36, beziehungsweise der ersten und zweiten Abtriebsregelung 24, 28.

Die derartige Vorrichtung wird zum Einstecken, Sammeln oder Zusammentragen von flexiblen, flächigen Produkten, hauptsächlich von Druckereiprodukten eingesetzt. Beim Einstecken werden typischerweise Teilprodukte von mehreren Zuförderern an ein Fördermittel übergeben, wozu das Fördermittel bevorzugt als Einstecktrommel, Klammerförderer oder Förderband gestaltet ist. Beim Sammeln ist das Fördermittel beispielsweise eine Sammeltrommel oder ein Linearförderer mit Sätteln, auf welche die gefalzten Teilprodukte rittlings aufgelegt werden. Ein derartiger Linearförderer zum Sammeln ist beispielsweise aus CH 688091 A5 bekannt. Beim Zusammentragen bildet typischerweise ein Linearförderer mit einem umlaufenden Förderband das Fördermittel. In diesem Fall werden die Produkte und/oder Teilprodukte zu einem Stapel zusammengetragen. Ein derartiger Linearförderer zum Zusammentragen ist beispielsweise aus WO 03/053831 A1 oder EP 1029705 1 bekannt. Unter Fördermittel 22 wird denn entsprechend auch eine Einsteck-, Sammel- oder Zusammentragvorrichtung verstanden, welche beispielsweise als Klammerförderer, Band, Trommel oder Sprossenförderer ausgebildet sind.

Allen oben genannten Vorrichtungen ist gemeinsam, dass sie eine Vielzahl von Bearbeitungseinheiten, welche typischerweise als Zuförderer gestaltet sind, aufweisen. Diese Zuförderer führen dem Fördermittel jeweils ein Haupt- oder ein Teilprodukt phasensynchronisiert zu. Unter Zuförderern werden beispielsweise Stangenanleger, Transporteure mit Greifern, Klammeranleger, Wickelanleger, wie auch Vorsammelvorrichtungen verstanden, welche ihrerseits wieder Vorsammelvorrichtungen beinhalten können.

Die Synchronisation zwischen den Bearbeitungseinheiten 14, 16 und der Produktsammeleinheit 12 bringt eine Vielzahl von Daten mit sich, welche untereinander ausgetauscht werden müssen. So kommuniziert das Leistungselement 96 über den Unterdatenbus 98 mit der Hauptantriebsregelung 18. Analog dazu kommunizieren die Leistungselemente 96a und 96b über Unterdatenbusse 98a und 98b mit der ihnen zugeordneten ersten, beziehungsweise zweiten Antriebsregelung 24, 28. Mit EtherCat als erstem Datenbus 32 werden die auszutauschenden Daten in einen Ethernet-Rahmen 100 eingetragen und entsprechend der Linienstruktur sequentiell und in Echtzeit entlang jedem Busteilnehmer geführt. Die erste Steuerung 38, der ersten und zweiten Datensammler 34, 36 und die Hauptantriebssteuerung 18, die erste und die zweite Antriebsregelung 24, 28 können die ihnen zugedachten Daten aus dem Rahmen (Frame) auslesen und insbesondere im Fall der ersten Steuerung 38 auch einschreiben.

Parallel dazu werden die ersten und zweiten Ist-Werte 42, 48 des ersten, beziehungsweise zweiten Erfassungselementes 40, 46 über die Signalleitungen 44 beziehungsweise 50 zur Hauptantriebsregelung 18 übertragen. Entsprechende Signale werden von entsprechenden weiteren ersten Erfassungselementen 40a, 40b und weiteren zweiten Erfassungselementen 46a, 46b erfasst und über entsprechende Signalleitungen 44a, 44b, 50a, 50b der ersten, beziehungsweise zweiten Antriebsregelung 24, 28 zugeführt.

Die Hauptantriebsregelung 18 ermittelt einen Leitwert 102 und übermittelt diesen mit dem ersten Ist-Wert 42 und dem zweiten Ist-Wert 48 per Rahmen über den ersten Datensammler 34 der ersten Antriebsregelung 24. Für die erste Antriebsregelung 24 bilden der erste Ist-Wert 42 und der zweite Ist-Wert 48 die Soll-Werte. Die erste Antriebsregelung 24 ermittelt auf Basis des Leitwertes 102, dem ersten Ist-Wert 42 und dem zweiten IstWert 48 einen ersten Soll-Wert 104 für den ersten Antrieb 26. Sinngemäss erzeugt die zweite Antriebsregelung 28 auf Basis des Leitwertes 102, dem ersten Ist-Wert 42 und dem zweiten Ist-Wert 48 einen zweiten Soll-Wert 106 für den zweiten Antrieb 26.

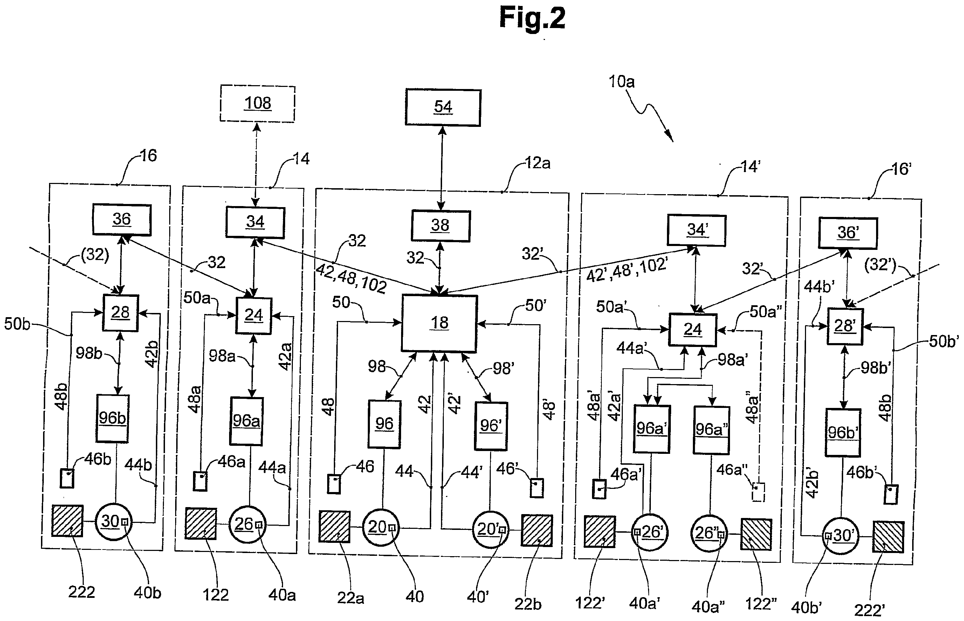

Anhand Figur 2 wird der prinzipielle Aufbau der Steuerlogik für eine parallele Verarbeitung oder eine serielle Verarbeitung anhand einer weiteren Ausführungsform einer Vorrichtung 10a der vorliegenden Erfindung aufgezeigt. Unter Verarbeitung wird ein Einstecken, Sammeln oder Zusammentragen verstanden. Obwohl beide Verarbeitungen nachfolgend anhand einer Sammeltrommel mit einem kreisförmigen Fördermittel 22 erklärt werden, gelten die nachstehenden Erklärungen sinngemäss auch für lineare Fördermittel wie Förderbändern.

Die in Figur 2 gezeigte Vorrichtung 10a umfasst ein mehrteiliges Fördermittel 22 mit einer zweiteiligen Sammeltrommel 22, aufweisend eine erste Teiltrommel als erstes Fördermittel 22a und eine zweite Teiltrommel als zweites Fördermittel 22b, deren Längsachsen typischerweise fluchten, das heisst, auf einer gemeinsamen Geraden liegen. Da sowohl der prinzipielle Aufbau, als auch der steuertechnische Betrieb vom Prinzip her jedoch weitgehend einer Vorrichtung gemäss Figur 1 entspricht, werden nachfolgend nur noch die Unterschiede zu jener Vorrichtung 10 erläutert, obwohl alle Elemente bezeichnet sind. Bei der Vorrichtung 10a ist eine Produktsammeleinheit 12a im Wesentlichen zentral angeordnet und weist beidseitig je eine erste und eine zweite Bearbeitungseinheit 14, 16, 14', 16' auf, wobei die erste und zweite Bearbeitungseinheit 14', 16' vom Aufbau her hier grundsätzlich spiegelbildlich zur ersten und zweiten Bearbeitungseinheit 14, 16 angeordnet und aufgebaut sind. Auf den Unterschied der ersten Bearbeitungseinheit 14' zur ersten Bearbeitungseinheit 14 wird an anderer Stelle noch detaillierter eingegangen.

Im Unterschied zur Antriebssituation der Vorrichtung 10 gemäss Figur 1 ist weist die Produktsammeleinheit 12a zwei Antriebsstränge auf. Aus diesem Grund ist denn auch jedem der zwei Hauptantriebe 20a, 20b je ein Leistungselement 96 und 96' zugeordnet, welches in bekannter Weise über je einen Unterdatenbus 98 und 98' mit der Hauptantriebsregelung 18 kommunizieren kann.

Da das erste Fördermittel 22a unabhängig vom zweiten Fördermittel 22b betreibbar sein soll, sind der erste Hauptantrieb 20a und der zweite Hauptantrieb 20b jeweils lediglich mit der ersten Teiltrommel, beziehungsweise der zweiten Teiltrommel verbunden. Dies bedingt, dass jeder Antriebsstrang eine eigene erste und zweite Ist-Wert-Erfassung mit entsprechenden eigenen ersten und zweiten Erfassungselementen 40, 40', 46, 46' aufweisen, welche die ermittelten Werte dann in bekannter Weise über entsprechende Signalleitungen 44, 44' der gemeinsamen Hauptantriebsregelung 18 zuführen. Zur besseren Übersicht sind Ist-Werte 42, 42', 42a, 42a', 42b, 42b', 48, 48', 48a, 48a', 48a", 48b, 48b' der entsprechenden Erfassungselemente 46, 46', 46a, 46a', 46a", 46b, 46b' quer zur sonst verwendeten Schreibrichtung beschriftet.

Mit einer derartig aufgebauten Vorrichtung 10a sind das erste Fördermittel 22a und das zweite Fördermittel 22b sowohl abhängig, als auch unabhängig voneinander antreibbar. Selbstverständlich können das erste Fördermittel 22a und das zweite Fördermittel 22b auch synchronisiert von ihrem ersten Hauptantrieb 20a beziehungsweise zweiten Hauptantrieb 20b angetrieben werden. In einer weiteren, hier nicht gezeigten Ausführungsform der Vorrichtung 10a weist die Produktsammeleinheit 12a einen einzeln gesteuerten ersten Hauptantrieb 20a und einen einzeln gesteuerten zweiten Hauptantrieb 20b auf. Dazu ist der ersten Hauptantrieb 20a über ein baugleiches Leistungselement mit einer ersten Hauptantriebsregelung verbunden, während der zweite Hauptantrieb 20b über ein weiteres baugleiches Leistungselement mit einer zweiten Hauptantriebsregelung verbunden ist.

Die erste und zweite Hauptantriebsregelung werden von der übergeordneten Einheit 54 vorzugsweise über den zweiten Datenbus 52 und über einen, dem zweiten Datenbus 52 entsprechenden weiteren Datenbus gesteuert und können entsprechend mit ihnen kommunizieren. In einer weiteren, nicht gezeigten Ausführungsform der Vorrichtung 10a entspricht die erste Hauptantriebsregelung der Hauptantriebsregelung 18 und dient als Master für die als Slave konzipierte zweite Hauptantriebsregelung. In diesem Fall ist die erste Hauptantriebsregelung über den zweiten Datenbus 52 mit der übergeordneten Einheit 54 verbunden und die erste Hauptantriebsregelung über einen weiteren Datenbus mit zweiten Hauptantriebsregelung verbunden.

Bei einer parallelen Verarbeitung von Produkten werden dem ersten Fördermittel 22a typischerweise Teilprodukte von einer ersten Gruppe von Zuförderern zugetragen und ein derart entstandenes erstes Hauptprodukt von einer dem ersten Fördermittel 22a zugeordneten ersten Wegführer entnommen, beziehungsweise übernommen und weggeführt. Analog dazu werden dem zweiten Fördermittel 22b typischerweise Teilprodukte von einer zweiten Gruppe von Zuförderern zugetragen und ein dadurch entstandenes, zweites Hauptprodukt wird anschliessend von einer dem zweiten Fördermittel 22b zugeordneten zweiten Wegführer entnommen, beziehungsweise übernommen und weggeführt. Es ist klar, dass die ersten und zweiten Hauptprodukte dabei identisch oder verschieden sein können.

Bei einer seriellen Verarbeitung von Produkten werden dem ersten Fördermittel 22a typischerweise Teilprodukte von einer ersten Gruppe von Zuförderern zugetragen und ein derart entstandenes erstes Hauptprodukt von einem dem ersten Fördermittel 22a zugeordneten ersten Wegführer entnommen, beziehungsweise übernommen und als Vorprodukt dem zweiten Fördermittel 22b wieder zugeführt. Dazwischen kann beispielsweise ein Beschriften der Produkte erfolgen. Dem zweiten Fördermittel 22b werden typischerweise weitere Teilprodukte von einer zweiten Gruppe von Zuförderern zugetragen, so dass letztlich ein einziges Hauptprodukt entsteht. Dieses Hauptprodukt wird dann beispielsweise vom zweiten Wegführer entnommen, beziehungsweise übernommen und weggeführt.

Aus der Figur 2 ist erkennbar, dass eine einzige Antriebsregelung mehrere Antriebe (im folgenden Fall zwei erste Antriebe 26', 26") unabhängig voneinander versorgt. Diese Eigenschaft ist beispielhaft auch anhand der ersten Bearbeitungseinheit 14' gezeigt. Bezüglich des Aufbaus mit zwei Antriebssträngen in der ersten Bearbeitungseinheit 14' entspricht die erste Bearbeitungseinheit 14' der Produktsammeleinheit 12a. Steuertechnisch gesehen ist sie jedoch gleich wie ihr Spiegelbild - die ersten Bearbeitungseinheit 14- aufgebaut. Dementsprechend gibt in Figur 2 ein Apostroph (') die Spiegelbildlichkeit wieder. Ein Unterdatenbus 98a' ist in der vorliegenden Ausführungsform zu einem leistungselementseitigen Anschluss eines Leistungselementes 96a' und von dort weiter zu einem zweiten Leistungselement 96a" geführt. Steuertechnisch gesehen kann man daher auch von einem Slavebetrieb des zweiten Leistungselement 96a" sprechen, für welches das erste Leistungselement 96a' den Master bildet. Da die ersten Antriebe 26' und 26" gleich angesteuert werden, wird auf eine Erfassung eines ersten lokalen IstWertes 48a' verzichtet, nicht jedoch auf eine Erfassung eines zweiten lokalen IstWertes 48a", da dieser Wert zur Überwachung des ersten Bearbeitungsmittels 122" benötigt ist.

Überdies weist die Figur 2 ein zusätzliches Element 108 auf, welches als Platzhalter für ein weiteres Peripheriegerät 108 steht. Mit dem zusätzlichen Element 108 können Daten aus dem ersten Datenspeicher 34 der ersten Bearbeitungseinheit 14 direkt abgerufen werden. Das zusätzliche Element 108 ist beispielsweise ein tragbarer Computer, ein Diagnosegerät oder ein IPC (Interpace).

Obwohl in der Figur 2 nur jeweils eine erste und eine zweite Bearbeitungseinheit 14, 14', 16, 16' gezeigt ist, ist dem Fachmann klar, dass entsprechend links und rechts der zweiten Bearbeitungseinheiten 16, 16' eine oder mehrere weitere Bearbeitungseinheiten angeordnet sein können.

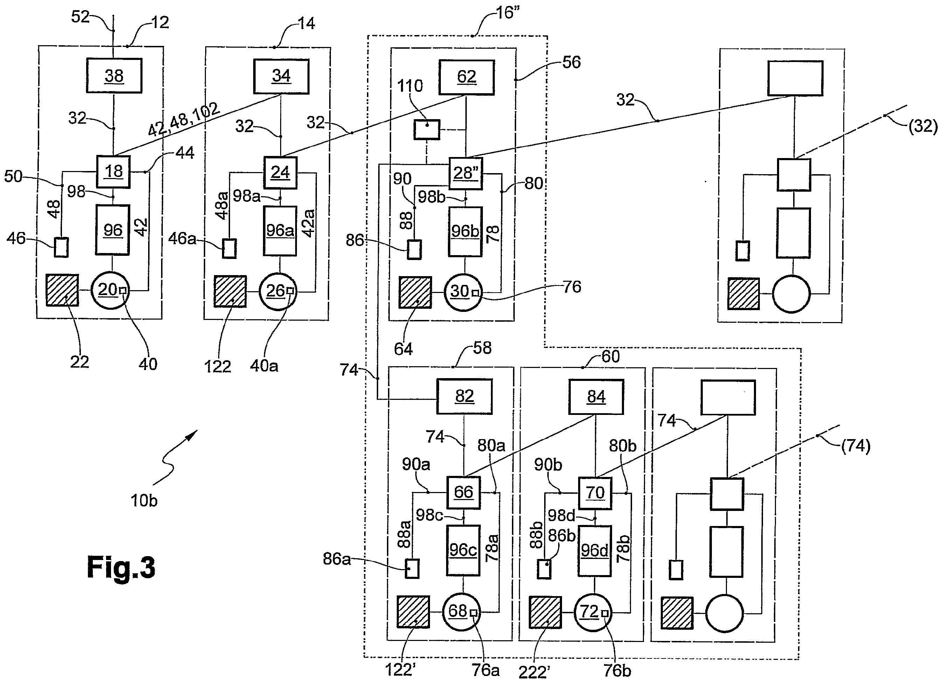

Die Figur 3 zeigt eine weitere Ausführungsform der vorliegenden Erfindung anhand einer Vorrichtung 10b. Der steuertechnische Aufbau der Vorrichtung 10b entspricht grundsätzlich dem Aufbau gemäss Figur 1. Im Unterschied zur in Figur 1 gezeigten Vorrichtung 10 weist die Vorrichtung 10b jedoch anstelle einer einfach aufgebauten zweiten Bearbeitungseinheit 16 eine etwas komplexere zweite Bearbeitungseinheit 16" auf. Bei näherer Betrachtung ist ersichtlich, dass es sich dabei um eine Untervorrichtung handelt, welche als Vorsammelvorrichtung definiert ist und dieselbe Steuerlogik und prinzipiell denselben Aufbau wie die in Figur 1 gezeigte Vorrichtung 10 aufweist. Rechts von der zweiten Bearbeitungseinheit 16" ist eine weitere Bearbeitungseinheit stellvertretend für eine oder mehrere weitere Bearbeitungseinheiten dargestellt. Ebenso ist rechts von der zweiten Vorbearbeitungseinheit 60 eine weitere Vorbearbeitungseinheit stellvertretend für eine oder mehrere weitere Vorbearbeitungseinheiten dargestellt.

Verglichen mit der Vorrichtung 10 entspricht bei der zweiten Bearbeitungseinheit 16" eine Vorproduktsammeleinheit 56 der Produktsammeleinheit 12, eine erste Vorbearbeitungseinheit 58 der ersten Bearbeitungseinheit 14, eine zweite Vorbearbeitungseinheit 60 der zweiten Bearbeitungseinheit 16, ein erster Unterdatensammler 82 dem ersten Datensammler 34, eine zweite Antriebsregelung 28" der zweiten Antriebsregelung 28, eine erste Vorantriebssteuerung 66 der ersten Antriebssteuerung 24, eine zweite Vorantriebssteuerung 70 der zweiten Antriebssteuerung 28, ein Leistungselement 96c samt Unterbus 98c dem Leistungselement 96b mit Unterbus 98b, ein Leistungselement 96d samt Unterbus 98d dem Leistungselement 96c mit Unterbus 98c, ein drittes Ist-Wert-Erfassungselement 76 dem ersten Ist-Wert-Erfassungselement 40, ein zweites Ist-Wert-Erfassungselement 86 dem zweiten Ist-Wert-Erfassungselement 46 usw. Der besseren Übersicht wegen sind die ersten und zweiten Ist-Werte 42, 48, 78, 88 sowie die entsprechenden lokalen Ist-Werte 42a, 48a, 78a, 78b, 88a, 88b quer zur sonstigen Leserichtung beschriftet.

Aus Figur 3 geht in Zusammenschau mit Figur 1 hervor, dass der Aufbau innerhalb der Einheiten beibehalten wurde, weshalb auf eine detaillierte Beschreibung der Verbindungsleitungen aufgrund der gleich bleibenden Funktionalität verzichtet wird.

Die zweite Antriebsregelung 28" kommuniziert über einen zweiten Datenbus 74 mit dem ersten Vordatensammler 82, der ersten Vorantriebsregelung 66, dem zweiten Vordatensammler 84 und der zweiten Vorantriebsregelung 70.

Anstelle eines als Slave definierten zweiten Datensammlers 36 ist in der Vorproduktsammeleinheit 56 eine als Slave definierte zweite Steuerung 62 angeordnet, ohne etwas an der Datenbusverbindung des ersten Datenbusses 32 zu ändern. Zudem weist die zweite Antriebsregelung 28" im Vergleich zur zweiten Antriebsregelung 28 eine zusätzliche Busschnittstelle für einen Industrial Ethernet-Bus auf.

Um einen Datenverkehr zwischen dem ersten Datenbus 32 und dem zweiten Datenbus 52 zu ermöglichen, ist in einer angedeuteten Ausführungsform der Vorrichtung 10b der zweite Datenbus 74 mit dem ersten Datenbus 32 über eine zusätzliche Datenverbindung verbunden. Die Verbindung erfolgt dabei allerdings nicht direkt, sondern über ein Kopplungselement 110. Daher ist die Verbindung als gestrichelte Linie dargestellt.

In dieser Ausführungsform mit der Vorrichtung 10b sind die Vorbearbeitungseinheiten 58, 60 wiederum als Vorsammelsysteme definiert. In diesem Fall werden die erste und die zweite Vordatensammler 82 und 84 entsprechend durch jeweils eine weitere Steuerung ersetzt, welche wiederum über einen eigenen Datenbus (bevorzugt wieder EtherCat) mit ihren jeweiligen untergeordneten Slaves kommunizieren.

### BEZUGSZEICHENLISTE

- 10, 10a, 10b: Vorrichtung
- 12, 12a: Produktsammeleinheit
- 14, 14': erste Bearbeitungseinheit
- 16, 16', 16": zweite Bearbeitungseinheit
- 18: Hauptantriebsregelung
- 20: Hauptantrieb/erster Hauptantrieb
- 20': zweiter Hauptantrieb
- 22: Fördermittel
- 22a: erstes Fördermittel
- 22b: zweites Fördermittel
- 24, 24': erste Antriebsregelung
- 26, 26', 26": erster Antrieb
- 28, 28', 28": zweite Antriebsregelung
- 30, 30': zweiter Antrieb
- 32, 32': erster Datenbus
- 34, 34': erster Datensammler
- 36, 36': zweiter Datensammler
- 38: erste Steuerung
- 40, 40', 40a, 40a', 40b, 40b': erstes Erfassungselement
- 42, 42', 42a, 42a', 42a", 42b, 42b': erster Ist-Wert (Ist-Feintakt)
- 44,44', 44a, 44a', 44b, 44b': erste Verbindung/Signalleitung
- 46,46', 46a, 46a', 46b, 46b': zweites Erfassungselement
- 48, 48', 48a, 48a', 48a", 48b, 48b': zweiter Ist-Wert (Ist-Einertakt)
- 50, 50', 50a, 50a', 50a", 50b, 50b': zweite Verbindung/Signalleitung
- 52: zweiter Datenbus
- 54: übergeordnete Einheit/ übergeordneter Datensammler
- 56: Vorproduktsammeleinheit
- 58: erste Vorbearbeitungseinheit
- 60: zweite Vorbearbeitungseinheit
- 62: zweite Steuerung
- 64: Vorfördermittel
- 66: erste Vorantriebsregelung
- 68: erster Vorantrieb
- 70: zweite Vorantriebsregelung
- 72: zweiter Vorantrieb
- 74: dritter Datenbus
- 76: drittes Erfassungselement
- 78: dritter Ist-Wert (Ist-Feintakt)
- 80: dritte Verbindung/Signalleitung
- 82: erster Vordatensammler
- 84: zweiter Vordatensammler
- 86, 86a, 86b: viertes Erfassungselement
- 88: vierter Ist-Wert (Ist-Einertakt)
- 90: vierte Verbindung/Signalleitung
- 92: erste Teiltrommel
- 94: zweite Teiltrommel
- 96, 96', 96a, 96a', 96a", 96b, 96b', 96c, 96d: Leistungselement
- 98, 98', 98a, 98a', 98b, 98b': Unterdatenbus
- 100: Busrahmen (Frame)
- 102: Leitwert
- 104: erster Soll-Wert
- 106: zweiter Soll-Wert
- 108: Peripheriegerät
- 110: Kopplungselement
- 122, 122', 122": erstes Bearbeitungsmittel
- 222, 222': zweites Bearbeitungsmittel

## Patentansprüche

1. Vorrichtung (10, 10a, 10b) zum Sammeln einer Vielzahl von flexiblen, flächigen Produkten, vorzugsweise Druckereiprodukten, wobei die Vorrichtung (10, 10a, 10b) eine Produktsammeleinheit (12, 12a), eine erste Bearbeitungseinheit (14, 14') und eine zweite Bearbeitungseinheit (16, 16', 16") zum synchronisierten Bearbeiten, beispielsweise Zuführen von Produkten aufweist, wobei die Produktsammeleinheit (14, 14') eine Hauptantriebsregelung (18) aufweist, welche mit einem Hauptantrieb (20, 20') zum Antreiben eines Fördermittels (22, 22a, 22b) wirkverbunden ist, die erste Bearbeitungseinheit (14, 14') eine erste Antriebsregelung (24, 24') aufweist, welche mit einem ersten Antrieb (26, 26', 26") wirkverbunden ist, die zweite Bearbeitungseinheit (16, 16', 16") eine zweite Antriebsregelung (28) aufweist, welche mit einem zweiten Antrieb (30) wirkverbunden ist, die Hauptantriebsregelung (18) sowie die erste und zweite Antriebsregelung (24, 28) über einen ersten Datenbus (32, 32') miteinander wirkverbunden sind, **dadurch gekennzeichnet, dass** die Produktsammeleinheit (12, 12a) eine erste Steuerung (38) aufweist, welche mit der Hauptantriebsregelung (18) verbunden ist und dass die erste Steuerung (38) mit dem ersten Datenbus (32, 32') verbunden ist, dass die erste Bearbeitungseinheit (14, 14') einen ersten Datensammler (34, 34') aufweist, welcher mit der Hauptantriebsregelung (18) und der ersten Antriebsregelung (24, 24') über den ersten Datenbus (32, 32') verbunden ist, und die zweite Bearbeitungseinheit (16, 16', 16") einen zweiten Datensammler (36, 36') aufweist, welcher mit der ersten Antriebsregelung (24, 24') und der zweiten Antriebsregelung (28) über den ersten Datenbus (32, 32') verbunden ist.

2. Vorrichtung nach Anspruch 1, **dadurch gekennzeichnet, dass** dem Hauptantrieb (20, 20') ein erstes Erfassungselement (40, 40') zum Erfassen eines ersten Ist-Wertes (42, 42') des Hauptantriebs (20, 20') zugeordnet ist und das erste Erfassungselement (40, 40') mit der Hauptantriebsregelung (18) über eine erste Verbindung, vorzugsweise einer ersten Signalleitung (44, 44') verbunden ist.

3. Vorrichtung nach Anspruch 2, **dadurch gekennzeichnet, dass** dem Fördermittel (22, 22a, 22b) ein zweites Erfassungselement (46, 46') zum Erfassen eines zweiten Ist-Wertes (48, 48') zugeordnet ist, welches mit der Hauptantriebsregelung (18) über eine zweite Verbindung, vorzugsweise einer zweiten Signalleitung (50, 50') verbunden ist.

4. Vorrichtung nach einem der Ansprüche 1 bis 3, **dadurch gekennzeichnet, dass** die erste oder zweite Bearbeitungseinheit (14, 14', 16, 16', 16") jeweils modular gestaltet ist.

5. Vorrichtung nach einem der Ansprüche 1 bis 4, **dadurch gekennzeichnet, dass** die erste Steuerung (38) über einen zweiten Datenbus (52) mit einer übergeordneten Einheit (54), vorzugsweise einem übergeordneten Datensammler (54) verbunden ist.

6. Vorrichtung nach einem der Ansprüche 1 bis 5, **dadurch gekennzeichnet, dass** die zweite Bearbeitungseinheit (16") als Vorsammelvorrichtung ausgelegt ist und eine Vorproduktsammeleinheit (56) sowie eine erste Vorbearbeitungseinheit (58) und eine zweite Vorbearbeitungseinheit (60) zum synchronisierten Bearbeiten, vorzugsweise zum Zuführen von Produkten aufweist, wobei die Vorproduktsammeleinheit (56) an Stelle des zweiten Datensammlers (36) eine zweite Steuerung (62) aufweist, welche über die zweite Antriebsregelung (28) mit dem zweiten Antrieb (30) zum Antreiben eines Vorfördermittels (64) wirkverbunden ist, die erste Vorbearbeitungseinheit (58) eine erste Vorantriebsregelung (66) aufweist, welche mit einem ersten Vorantrieb (68) wirkverbunden ist, die zweite Vorbearbeitungseinheit (60) eine zweite Vorantriebsregelung (70) aufweist, welche mit dem zweiten Vorantrieb (72) wirkverbunden ist, die zweite Antriebsregelung (28) und die erste und zweite Vorantriebsregelung (66, 70) über einen dritten Datenbus miteinander wirkverbunden sind, dem zweiten Antrieb (30) ein drittes Erfassungselement (76) zum Erfassen eines dritten Ist-Wertes (78) des zweiten Antriebs (30) zugeordnet ist, welches mit der zweiten Antriebsregelung (28") über eine dritte Verbindung, vorzugsweise einer Signalleitung (44) verbunden ist, die erste Vorbearbeitungseinheit (58) einen ersten Vordatensammler (82) aufweist, welcher mit der zweiten Antriebsregelung (28") und der ersten Vorantriebsregelung (66) wirkverbunden ist, die zweite Vorbearbeitungseinheit (60) einen zweiten Vordatensammler (84) aufweist, welcher mit der ersten Vorantriebsregelung (66) und der zweiten Unterantriebsregelung (70) wirkverbunden ist, und dem Vorfördermittel (64) ein viertes Erfassungselement (86) zum Erfassen eines vierten Ist-Wertes (88) des Vorfördermittels (64) zugeordnet ist, wobei das Erfassungselement (86) mit der zweiten Antriebsregelung (28") über eine vierte Verbindung (90), vorzugsweise eine Signalleitung (90) verbunden ist.

7. Vorrichtung nach einem der Ansprüche 1 bis 6, **dadurch gekennzeichnet, dass** das Fördermittel (22, 22a, 22b) eine Einsteck-, Sammel- oder Zusammentragvorrichtung ist.

8. Vorrichtung nach Anspruch 7, **dadurch gekennzeichnet, dass** das Fördermittel (22) ein erstes Fördermittel (22a) und ein zweites Fördermittel (22b) umfasst, wobei dem ersten Fördermittel (22a) ein erster Hauptantrieb (20a) und dem zweiten Fördermittel (22b) ein zweiter Hauptantrieb (22b) zugeordnet ist, und der erste und zweite Hauptantrieb (20a, 20b) vorzugsweise gemeinsam mit der Hauptantriebsregelung (18) wirkverbunden sind.

9. Vorrichtung nach einem der Ansprüche 1 bis 8, **dadurch gekennzeichnet, dass** das Fördermittel (22) ein Förderband ist.

10. Vorrichtung nach Anspruch 9, **dadurch gekennzeichnet, dass** das Förderband (22) fächerartige Abteile aufweist.

11. Vorrichtung nach einem der Ansprüche 1 bis 10, **dadurch gekennzeichnet, dass** der Hauptantrieb (20, 20') sowie der erste und zweite Antrieb (26, 26', 26", 30, 30') leistungsmässig mittels jeweils einem Leistungselement (96a, 96a', 96b, 96b'), vorzugsweise einem winkelsynchronisierten Frequenzumrichter angetrieben sind, wobei die jeweiligen Leistungselemente (96a, 96a', 96b, 96b') steuertechnisch jeweils über einen eigenen Unterdatenbus (98, 98', 98a, 98a', 98b, 98b') mit der ihnen zugeordneten Hauptantriebsregelung (18) beziehungsweise der ersten oder zweiten Antriebssteuerung (24, 24', 28) verbunden sind.

12. Vorrichtung nach Anspruch 11, **dadurch gekennzeichnet, dass** die Hauptantriebsregelung (18) und/oder die erste Antriebsregelung (24, 24') und/oder die zweite Antriebsregelung (26, 26', 26") jeweils mit mehreren Leistungselementen (96, 96', 96a', 96a") zum Antreiben mehrerer Antriebe (26, 26', 26") verbunden sind.

13. Vorrichtung nach Anspruch 11 oder 12, **dadurch gekennzeichnet, dass** ein Leistungselement (96a') als Master mit einem weiteren Leistungselement (96a") als Slave verbunden ist, mittels der weitere Antriebe (26") ansteuerbar sind.

14. Verfahren zum Einstecken, Sammeln oder Zusammentragen einer Vielzahl von flexiblen, flächigen Produkten, vorzugsweise Druckereiprodukten, mit einer Vorrichtung (10, 10a, 10b), welche eine Produktsammeleinheit (12), eine erste Bearbeitungseinheit (14, 14') und eine zweite Bearbeitungseinheit (16, 16', 16") aufweist, wobei die erste Bearbeitungseinheit (14, 14') und die zweite Bearbeitungseinheit (16, 16', 16") zum synchronisierten Bearbeiten, beispielsweise Zuführen von Produkten ausgelegt sind, die Hauptantriebsregelung (18) mit einem Hauptantrieb (20, 20') zum Antreiben eines Fördermittels (22) wirkverbunden ist, die erste Bearbeitungseinheit (14, 14') eine erste Antriebsregelung (24, 24') und einen ersten Antrieb (26, 26', 26") aufweist, welcher mittels der ersten Antriebsregelung (24, 24') gesteuert wird, die zweite Bearbeitungseinheit (16, 16', 16") eine zweite Antriebsregelung (28) und einen zweiten Antrieb (30) aufweist, welcher mittels der zweiten Antriebsregelung (28) gesteuert wird, die Hauptantriebsregelung (18) sowie die erste und zweite Antriebsregelung (24, 24', 28) über einen ersten Datenbus (32, 32') Daten austauschen, **dadurch gekennzeichnet, dass** die Produktsammeleinheit (12, 12a) eine erste Steuerung (38) aufweist, welche mit der Hauptantriebsregelung (18) zum Austauschen von Daten über den ersten Datenbus (32) verbunden ist, dass die erste Bearbeitungseinheit (14, 14') einen ersten Datensammler (34, 34') und die zweite Bearbeitungseinheit (16, 16', 16") einen zweiten Datensammler (36, 36') aufweist und Daten von der Hauptantriebsregelung (18), welche für die zweite Antriebsregelung (26, 26', 26") vorgesehen sind, nacheinander über den ersten Datensammler (34, 34'), die erste Antriebsregelung (24, 24'), den zweiten Datensammler (36, 36') an die zweite Antriebsregelung (28, 28', 28") übermittelt werden.

15. Verfahren nach Anspruch 14, **dadurch gekennzeichnet, dass** dem Hauptantrieb (20, 20') ein erstes Erfassungselement (40, 40') zugeordnet ist, welches einen ersten Ist-Wert (42, 42') des Hauptantriebs (20, 20') erfasst und der Hauptantriebsregelung (18) übermittelt.

16. Verfahren nach Anspruch 15, **dadurch gekennzeichnet, dass** dem Fördermittel (22, 22a, 22b) ein zweites Erfassungselement (46, 46') zugeordnet ist, welches einen zweiten Ist-Wert (48, 48') des Fördermittels (22) erfasst und der Hauptantriebsregelung (18) übermittelt.

17. Verfahren nach Anspruch 14 oder 15, **dadurch gekennzeichnet, dass** der erste Datenbus (32, 32') in Echtzeit Daten übermittelt und dazu einen Bus-Rahmen (100) aufweist, in welchen die erste Steuerung (38), die Hauptantriebssteuerung (18), die erste und die zweite Antriebsregelung (24, 24', 28, 28', 28") sowie der erste und der zweite Datensammler (34, 34', 36, 36') Daten einlesen und auslesen.

18. Verfahren nach einem der Ansprüche 14 bis 17, **dadurch gekennzeichnet, dass** das Fördermittel (22) ein erstes Fördermittel (22a) und ein zweites Fördermittel (22b) umfasst, wobei dem ersten Fördermittel (22a) ein erster Hauptantrieb (20a) und dem zweiten Fördermittel (22b) ein zweiter Hauptantrieb (22b) zugeordnet ist, und der erste und zweite Hauptantrieb (20a, 20b) vorzugsweise gemeinsam mit der Hauptantriebsregelung (18) wirkverbunden sind und von der Hauptantriebsregelung (18) derart angesteuert werden, dass das erste Fördermittel (22a) und dass zweite Fördermittel (22b) sowohl unabhängig voneinander, als auch zueinander synchronisiert antreibbar sind.

19. Verfahren nach einem der Ansprüche 14 bis 18, **dadurch gekennzeichnet, dass** Daten von der ersten Steuerung (38) über einen zweiten Datenbus (52) mit einer übergeordneten Einheit (54), vorzugsweise einem übergeordneten Datensammler ausgetauscht werden.

20. Verfahren nach einem der Ansprüche 14 bis 19, **dadurch gekennzeichnet, dass** die Hauptantriebsregelung (18) einen Leitwert (102, 102') erzeugt und diesen mit dem ersten Ist-Wert (42, 42') und dem zweiten Ist-Wert (48, 48') über den ersten Datensammler (34, 34') der ersten Antriebsregelung (24, 24') übermittelt, worauf die ersten Antriebsregelung (24, 24') einen ersten Soll-Wert (104, 104') für den ersten Antrieb (26, 26') ermittelt, und die Hauptantriebsregelung (18) den Leitwert (102, 102') sowie den ersten Ist-Wert (42, 42') und den zweiten Ist-Wert (48, 48') der zweiten Antriebsregelung (28, 28') übermittelt, worauf die zweite Antriebsregelung (28, 28') einen zweiten Soll-Wert (106, 106') für den zweiten Antrieb (30, 30') ermittelt.

## Claims

1. A device (10, 10a, 10b) for collecting a plurality of flexible, planar products, preferably printed products, the device (10, 10a, 10b) having a product collection unit (12, 12a), a first processing unit (14, 14'), and a second processing unit (16, 16', 16") for the synchronised processing, for example feeding, of products, the product collection unit (14, 14') having a main drive controller (18), which is operatively connected to a main drive (20, 20') for driving a conveying means (22, 22a, 22b), the first processing unit (14, 14') having a first drive controller (24, 24'), which is operatively connected to a first drive (26, 26', 26"), and the second processing unit (16, 16', 16") having a second drive controller (28), which is operatively connected to a second drive (30), the main drive controller (18) and the first and second drive controllers (24, 28) being operatively connected to each other via a first data bus (32, 32'), **characterised in that**
the product collection unit (12, 12a) has a first control system (38), which is connected to the main drive controller (18), and the first control system (38) is connected to the first data bus (32, 32'), the first processing unit (14, 14') has a first data collector (34, 34'), which is connected to the main drive controller (18) and the first drive controller (24, 24') via the first data bus (32, 32'), and the second processing unit (16, 16', 16") has a second data collector (36, 36'), which is connected to the first drive controller (24, 24') and the second drive controller (28) via the first data bus (32, 32').

2. The device according to Claim 1,
**characterised in that**
the main drive (20, 20') is assigned a first sensing element (40, 40') for sensing a first actual value (42, 42') of the main drive (20, 20'), and the first sensing element (40, 40') is connected to the main drive controller (18) via a first connection, preferably a first signal line (44, 44').

3. The device according to Claim 2,
**characterised in that**
the conveying means (22, 22a, 22b) is assigned a second sensing element (46, 46') for sensing a second actual value (48, 48'), which element is connected to the main drive controller (18) via a second connection, preferably a second signal line (50, 50').

4. The device according to any one of Claims 1 to 3, **characterised in that**
the first or second processing unit (14, 14', 16, 16', 16") is in each case of modular design.

5. The device according to any one of Claims 1 to 4, **characterised in that**
the first control system (38) is connected to a higher-level unit (54), preferably a higher-level data collector (54), via a second data bus (52).

6. The device according to any one of Claims 1 to 5, **characterised in that**
the second processing unit (16") is in the form of a preliminary collecting device and has a preliminary product collection unit (56) and a first preliminary processing unit (58) and a second preliminary processing unit (60) for the synchronised processing, preferably feeding, of products, wherein the preliminary product collection unit (56) has a second control system (62) instead of the second data collector (36), which second control system is operatively connected via the second drive controller (28) to the second drive (30) for driving a preliminary conveying means (64); the first preliminary processing unit (58) has a first preliminary drive controller (66), which is operatively connected to a first preliminary drive (68); the second preliminary processing unit (60) has a second preliminary drive controller (70), which is operatively connected to the second preliminary drive (72); the second drive controller (28) and the first and second preliminary drive controllers (66, 70) are operatively connected to each other via a third data bus; the second drive (30) is assigned a third sensing element (76) for sensing a third actual value (78) of the second drive (30), which element is connected to the second drive controller (28") via a third connection, preferably a signal line (44); the first preliminary processing unit (58) has a first preliminary data collector (82), which is operatively connected to the second drive controller (28") and the first preliminary drive controller (66); the second preliminary processing unit (60) has a second preliminary data collector (84), which is operatively connected to the first preliminary drive controller (66) and the second subordinate drive controller (70); and the preliminary conveying means (64) is assigned a fourth sensing element (86) for sensing a fourth actual value (88) of the preliminary conveying means (64), wherein the sensing element (86) is connected to the second drive controller (28") via a fourth connection (90), preferably a signal line (90).

7. The device according to any one of Claims 1 to 6, **characterised in that**
the conveying means (22, 22a, 22b) is an inserting, collecting or collating device.

8. The device according to Claim 7,
**characterised in that**
the conveying means (22) comprises a first conveying means (22a) and a second conveying means (22b), wherein the first conveying means (22a) is assigned a first main drive (20a) and the second conveying means (22b) is assigned a second main drive (22b), and the first and second main drives (20a, 20b) are operatively connected, preferably jointly, to the main drive controller (18).

9. The device according to any one of Claims 1 to 8, **characterised in that**
the conveying means (22) is a conveyor belt.

10. The device according to Claim 9,
**characterised in that**
the conveyor belt (22) has fan-like sections.

11. The device according to any one of Claims 1 to 10, **characterised in that**
the main drive (20, 20') and the first and second drives (26, 26', 26", 30, 30') are each driven in power terms by means of a power element (96a, 96a', 96b, 96b'), preferably an angle-synchronised frequency converter, wherein the respective power elements (96a, 96a', 96b, 96b') are connected for control to the main drive controller (18) assigned to them and to the first or second drive control system (24, 24', 28), each via a dedicated subordinate data bus (98, 98', 98a, 98a', 98b, 98b').

12. The device according to Claim 11,
**characterised in that**
the main drive controller (18) and/or the first drive controller (24, 24') and/or the second drive controller (26, 26', 26") are each connected to a plurality of power elements (96, 96', 96a', 96a") for driving a plurality of drives (26, 26', 26").

13. The device according to Claim 11 or 12,
**characterised in that**
a power element (96a') as a master is connected to a further power element (96a") as a slave, by means of which the further drives (26") can be actuated.

14. A method for inserting, collecting or collating a plurality of flexible, planar products, preferably printed products, with a device (10, 10a, 10b) that has a product collection unit (12), a first processing unit (14, 14'), and a second processing unit (16, 16', 16"), the first processing unit (14, 14') and the second processing unit (16, 16', 16") being designed for the synchronised processing, for example feeding, of products, the main drive controller (18) being operatively connected to a main drive (20, 20') for driving a conveying means (22), the first processing unit (14, 14') having a first drive controller (24, 24') and a first drive (26, 26', 26"), which is controlled by means of the first drive controller (24, 24'), the second processing unit (16, 16', 16") having a second drive controller (28) and a second drive (30), which is controlled by means of the second drive controller (28), the main drive controller (18) and the first and second drive controllers (24, 24', 28) exchanging data via a first data bus (32, 32'), **characterised in that**
the product collection unit (12, 12a) has a first control system (38), which is connected to the main drive controller (18) for exchanging data via the first data bus (32), the first processing unit (14, 14') has a first data collector (34, 34'), and the second processing unit (16, 16', 16") has a second data collector (36, 36'), and data from the main drive controller (18), which are provided for the second drive controller (26, 26', 26"), are transmitted successively via the first data collector (34, 34'), the first drive controller (24, 24'), and the second data collector (36, 36') to the second drive controller (28, 28', 28").

15. The method according to Claim 14,
**characterised in that**
the main drive (20, 20') is assigned a first sensing element (40, 40'), which senses a first actual value (42, 42') of the main drive (20, 20') and transmits said value to the main drive controller (18).

16. The method according to Claim 15,
**characterised in that**
the conveying means (22, 22a, 22b) is assigned a second sensing element (46, 46'), which senses a second actual value (48, 48') of the conveying means (22) and transmits said value to the main drive controller (18).

17. The method according to Claim 14 or 15, **characterised in that**
the first data bus (32, 32') transmits data in real time and to this end has a bus frame (100), to and from which the first control system (38), the main drive control system (18), the first and second drive controllers (24, 24', 28, 28', 28"), and the first and second data collectors (34, 34', 36, 36') read data.

18. The method according to any one of Claims 14 to 17, **characterised in that**
the conveying means (22) comprises a first conveying means (22a) and a second conveying means (22b), wherein the first conveying means (22a) is assigned a first main drive (20a) and the second conveying means (22b) is assigned a second main drive (22b), and the first and second main drives (20a, 20b) are operatively connected, preferably jointly, to the main drive controller (18) and are actuated by the main drive controller (18) such that the first conveying means (22a) and the second conveying means (22b) can be driven both independently of each other and in synchronisation with each other.

19. The method according to any one of Claims 14 to 18, **characterised in that**
data from the first control system (38) are exchanged with a higher-level unit (54), preferably a higher-level data collector, via a second data bus (52).

20. The method according to any one of Claims 14 to 19, **characterised in that**
the main drive controller (18) generates a reference value (102, 102') and transmits this with the first actual value (42, 42') and the second actual value (48, 48') to the first drive controller (24, 24') via the first data collector (34, 34'), whereupon the first drive controller (24, 24') determines a first target value (104, 104') for the first drive (26, 26'), and the main drive controller (18) transmits the reference value (102, 102') and the first actual value (42, 42') and the second actual value (48, 48') to the second drive controller (28, 28'), whereupon the second drive controller (28, 28') determines a second target value (106, 106') for the second drive (30, 30').

## Revendications

1. Dispositif (10,10a,10b) pour rassembler une pluralité de produits flexibles, plats, de préférence des produits d'imprimerie, le dispositif (10,10a,10b) comportant une unité de collecte de produits (12,12a), une première unité de traitement (14,14') et une deuxième unité de traitement (16,16',16") pour le traitement synchronisé, par exemple l'alimentation en produits, l'unité de collecte de produits (14,14') comportant une régulation de l'entraînement principal (18), laquelle est reliée de manière fonctionnelle avec un entraînement principal (20,20') pour entraîner un moyen de transport (22,22a,22b), la première unité de traitement (14,14') comportant une première régulation d'entraînement (24,24'), laquelle est reliée de manière fonctionnelle avec un premier entraînement (26,26',26") la deuxième unité de traitement (16,16',16") comportant une deuxième régulation d'entraînement (28), laquelle est reliée de manière fonctionnelle avec un deuxième entraînement (30), la régulation de l'entraînement principal (18) ainsi que la première et la deuxième régulation d'entraînement (24,28) étant reliées de manière fonctionnelle entre elles par le biais d'un premier bus de données (32,32'), **caractérisé en ce que** l'unité de collecte de produits (12,12a) comporte une première commande (38), laquelle est reliée avec la régulation d'entraînement principal (18), et **en ce que** la première commande (38) est reliée au premier bus de données (32,32'), **en ce que** la première unité de traitement (14,14') comporte un premier collecteur de données (34,34'), lequel est relié par le biais du premier bus de données (32,32') à la première régulation d'entraînement principal (18) et à la première régulation d'entraînement (24,24') et la deuxième unité de traitement (16,16',16") comporte un deuxième collecteur de données (36,36'), lequel est relié par le biais du premier bus de données (32,32') à la première régulation d'entraînement (24,24') et à la deuxième régulation d'entraînement (28).

2. Dispositif selon la revendication 1, **caractérisé en ce qu'**un premier élément de saisie (40,40') est attribué à l'entraînement principal (20,20') pour saisir une première valeur réelle (42,42') de l'entraînement principal (20,20') et le premier élément de saisie (40,40') est relié à la régulation d'entraînement principal (18) par le biais d'une première liaison, de préférence une première ligne de signaux (44,44').

3. Dispositif selon la revendication 2, **caractérisé en ce qu'**un deuxième élément de saisie (46,46') est attribué au moyen de transport (22,22a,22b) pour saisir une deuxième valeur réelle (48,48'), lequel est relié à la régulation d'entraînement principal (18) par le biais de la deuxième liaison, de préférence d'une deuxième ligne de signaux (50,50').

4. Dispositif selon l'une quelconque des revendications 1 à 3, **caractérisé en ce que** la première ou deuxième unité de traitement (14,14',16,16',16") est configurée respectivement de manière modulaire.

5. Dispositif selon l'une quelconque des revendications 1 à 4, **caractérisé en ce que** la première commande (38) est reliée par le biais d'un deuxième bus de données (52) à une unité supérieure (54), de préférence un collecteur de données (54) supérieur.

6. Dispositif selon l'une quelconque des revendications 1 à 5, **caractérisé en ce que** la deuxième unité de traitement (16") est conçue comme dispositif de précollecte et comporte une unité de précollecte de produits (56) ainsi qu'une première unité de prétraitement (58) et une deuxième unité de prétraitement (60) pour le traitement synchronisé, de préférence pour alimenter des produits, l'unité de précollecte de produits (56) comportant à l'emplacement du deuxième collecteur de données (36) une deuxième commande (62), laquelle est reliée de manière fonctionnelle par le biais de la deuxième régulation d'entraînement (28) au deuxième entraînement (30) pour entraîner un moyen de transport préliminaire (64), la première unité de prétraitement (58) comportant une première régulation d'entraînement préliminaire (66), laquelle est reliée de manière fonctionnelle à une première entraînement préliminaire (68), la deuxième unité de prétraitement (60) comportant une deuxième régulation d'entraînement préliminaire (70), laquelle est reliée de manière fonctionnelle au deuxième entraînement préliminaire (72), la deuxième régulation d'entraînement (28) et la première et deuxième régulation d'entraînement préliminaire (66,70) étant reliées de manière fonctionnelle entre elles par le biais d'un troisième bus de données, un troisième élément de saisie (76) étant attribué au deuxième entraînement (30) pour saisir une troisième valeur réelle (78) du deuxième entraînement (30), lequel est relié à la deuxième régulation d'entraînement (28") par le biais d'une troisième liaison, de préférence une ligne de signaux (44), la première unité de prétraitement (58) comportant un premier collecteur de données préliminaire (82), lequel est relié de manière fonctionnelle à la deuxième régulation d'entraînement (28") et à la première régulation d'entraînement préliminaire (66), la deuxième unité de prétraitement (60) comportant un deuxième collecteur de données préliminaire (84), lequel est relié de manière fonctionnelle à la première régulation d'entraînement préliminaire (66) et à la deuxième régulation d'entraînement inférieur (70) et un quatrième élément de saisie (86) étant attribué au moyen de transport préliminaire (64) pour saisir une quatrième valeur réelle (88) du moyen de transport préliminaire (64), l'élément de saisie (86) étant relié à la deuxième régulation d'entraînement (28") par le biais d'une quatrième liaison (90), de préférence une ligne de signaux (90).

7. Dispositif selon l'une quelconque des revendications 1 à 6, **caractérisé en ce que** le moyen de transport (22,22a,22b) est un dispositif de connexion, de collecte ou de rassemblement.

8. Dispositif selon la revendication 7, **caractérisé en ce que** le moyen de transport (22) comprend un premier moyen de transport (22a) et un deuxième moyen de transport (22b), un premier entraînement principal (20a) étant attribué au premier moyen de transport (22a) et un deuxième entraînement principal (22b) au deuxième moyen de transport (22b) et le premier et le deuxième entraînement principal (20a,20b) étant reliés de manière fonctionnelle de préférence en commun à la régulation d'entraînement principal (18).

9. Dispositif selon l'une quelconque des revendications 1 à 8, **caractérisé en ce que** le moyen de transport (22) est une bande transporteuse.

10. Dispositif selon la revendication 9, **caractérisé en ce que** la bande transporteuse (22) comporte des compartiments de type éventail.

11. Dispositif selon l'une quelconque des revendications 1 à 10, **caractérisé en ce que** l'entraînement principal (20,20') ainsi que le premier et le deuxième entraînement (26,26',26",30,30') sont entraînés du point de vue puissance au moyen respectivement d'un élément de puissance (96a,96a',96b,96b'), de préférence un convertisseur de fréquence à synchronisation angulaire, les éléments de puissance respectifs (96a,96a',96b,96b') étant reliés selon la technologie de commande respectivement par le biais d'un bus de données inférieur propre (98,98',98a,98a',98b,98b') à la régulation d'entraînement principal (18) attribuée à ceux-ci, ou à la première ou deuxième commande d'entraînement (24,24',28).

12. Dispositif selon la revendication 11, **caractérisé en ce que** la régulation d'entraînement principal (18) et/ou la première régulation d'entraînement (24,24') et/ou la deuxième régulation d'entraînement (26,26,26") sont respectivement reliées à plusieurs éléments de puissance (96,96',96a',96a") pour entraîner plusieurs entraînements (26,26',26").

13. Dispositif selon la revendication 11 ou 12, **caractérisé en ce qu'**un élément de puissance (96a') est relié en tant qu'élément maître à un autre élément de puissance (96a'') en tant qu'élément asservi au moyen desquels d'autres entraînements (26") peuvent être pilotés.

14. Méthode pour connecter, collecter ou rassembler une pluralité de produits flexibles, plats, de préférence des produits d'imprimerie, avec un dispositif (10,10a,10b), lequel comporte une unité de collecte de produits (12), une première unité de traitement (14,14") et une deuxième unité de traitement (16,16',16"), la première unité de traitement (14,14') et la deuxième unité de traitement (16,16',16") étant conçues pour un traitement synchronisé, par exemple l'alimentation en produits, la régulation d'entraînement principal (18) étant reliée de manière fonctionnelle à un entraînement principal (20,20') pour entraîner un moyen de transport (22), la première unité de traitement (14,14') comportant une première régulation d'entraînement (24,24') et un premier entraînement (26,26',26"), lequel est piloté au moyen de la première régulation d'entraînement (24,24'), la deuxième unité de traitement (16,16',16") comportant une deuxième régulation d'entraînement (28) et un deuxième entraînement (30), lequel est piloté au moyen de la deuxième régulation d'entraînement (28), la régulation d'entraînement principal (18) ainsi que la première et la deuxième régulation d'entraînement (24,24',28) échangeant des données par le biais d'un bus de données (32,32'), **caractérisée en ce que** l'unité de collecte de produits (12,12a) comporte une première commande (38), laquelle est reliée à la régulation d'entraînement principal (18) pour un échange de données par le biais d'un bus de données (32), **en ce que** la première unité de traitement (14,14') comporte un premier collecteur de données (34,34') et la deuxième unité de traitement (16,16',16") un deuxième collecteur de données (36,36') et des données, prévues pour la deuxième régulation d'entraînement (26,26',26"), sont transmises les unes derrière les autres de la régulation d'entraînement principal (18) par le biais du premier collecteur de données (34,34'), de la première régulation d'entraînement (24,24'), du deuxième collecteur de données (36,36') à la deuxième régulation d'entraînement (28,28',28").

15. Méthode selon la revendication 14, **caractérisée en ce qu'**un premier élément de saisie (40,40') est attribué à l'entraînement principal (20,20'), qui saisit une première valeur réelle (42,42') de l'entraînement principal (20,20') et transmet à la régulation d'entraînement principal (18).

16. Dispositif selon la revendication 15, **caractérisé en ce qu'**un deuxième élément de saisie (46,46') est attribué au moyen de transport (22,22a,22b) qui saisit une deuxième valeur réelle (48,48') du moyen de transport (22) et transmet à la régulation d'entraînement principal (18).

17. Méthode selon la revendication 14 ou 15, **caractérisée en ce que** le premier bus de données (32,32') transmet des données en temps réel et comporte à cet effet un cadre de bus (100) dans lequel la première commande (38), la commande d'entraînement principal (18), la première et la deuxième régulation d'entraînement (24,24',28,28',28") ainsi que le premier et le deuxième collecteur de données (34,34',36,36') entrent et sortent des données par lecture.

18. Méthode selon l'une quelconque des revendications 14 à 17, **caractérisée en ce que** le moyen de transport (22) comprend un premier moyen de transport (22a) et un deuxième moyen de transport (22b), un premier entraînement principal (20a) étant attribué au premier moyen de transport (22a) et un deuxième entraînement principal (22b) est attribué au deuxième moyen de transport (22b) et le premier et deuxième entraînement principal (20a,20b) sont reliés de préférence en commun de manière fonctionnelle à la régulation d'entraînement principal (18) et sont pilotés par la régulation d'entraînement principal (18) de telle manière que le premier moyen de transport (22a) et le deuxième moyen de transport (22b) peuvent être entraînés aussi bien indépendamment l'un de l'autre que synchronisés l'un par rapport à l'autre.

19. Méthode selon l'une quelconque des revendications 14 à 18, **caractérisée en ce que** des données de la première commande (38) sont échangées avec une unité supérieure (54) par le biais d'un deuxième bus de données (52), de préférence avec un collecteur de données supérieur.

20. Méthode selon l'une quelconque des revendications 14 à 19, **caractérisée en ce que** la régulation d'entraînement principal (18) produit une valeur de conduite (102,102') et transmet celle-ci avec la première valeur réelle (42,42') et la deuxième valeur réelle (48,48') à la première régulation d'entraînement (24,24') par le biais du premier collecteur de données (34,34'), à la suite de quoi la première régulation d'entraînement (24,24') établit une première valeur théorique (104,104') pour le premier entraînement (26,26') et la régulation d'entraînement principal (18) transmet la valeur de conduite (102, 102') ainsi que la première valeur réelle (42,42') et la deuxième valeur réelle (48,48') à la deuxième régulation d'entraînement (28,28'), à la suite de quoi la deuxième régulation d'entraînement (28,28') établit une deuxième valeur théorique (106,106') pour le deuxième entraînement (30,30').
